# FASCICULE DE BREVET EUROPEEN

(11) **EP 2 058 444 B1**
(45) Date de publication et mention de la délivrance du brevet: **16.05.2012**
(21) Numéro de dépôt: 08168099.3
(22) Date de dépôt: 31.10.2008
(51) Int. Cl.: E04B 1/35, E04H 12/34

(54) **Procédé de construction d'un ouvrage civil et système associé**
Konstruktionsverfahren eines Tiefbaus und entsprechendes System
Method of building a civil engineering structure and associated system

(30) Priorité: 09.11.2007 FR 0707880
(43) Date de publication de la demande: 13.05.2009
(73) Titulaire: Soletanche Freyssinet, 92500 Rueil Malmaison (FR)
(72) Inventeur: Stubler, Jérôme, 75016 Paris (FR); Lebon, Jean-Daniel, 78100 Saint Germain en Laye (FR); Petit, Sébastien, 75004 Paris (FR)
(74) Mandataire: Cabinet Plasseraud

(56) Documents cités:
- EP-A- 0 607 915
- EP-A- 1 350 953
- US-B1- 6 868 646

## Description

La présente invention concerne la construction d'un ouvrage civil comportant des éléments superposés.

Les ouvrages civils sont généralement de grandes dimensions et nécessitent des moyens de construction spécifiques, qui ne servent le plus souvent que de manière ponctuelle.

A titre d'exemple, la construction d'une éolienne offshore, c'est-à-dire destinée à être située en pleine mer, se fait classiquement de la façon suivante : on construit à terre la portion inférieure de l'éolienne incluant l'embase, on la transporte en mer en la retenant par une grue placée sur une barge, puis, une fois en mer, on pose le rotor et les pales formant l'hélice de l'éolienne sur la portion inférieure de l'éolienne.

On comprend que de tels travaux sont relativement longs, complexes et coûteux.

Dans ce cas particulier d'une éolienne offshore, la complexité des travaux est renforcée par le fait qu'ils sont en bonne partie réalisés en pleine mer. Et même les travaux effectués à quai peuvent poser problème, dans la mesure où ils requièrent des quais de taille suffisante et capables de supporter d'importantes charges, ce qui est particulièrement rare et cher.

US 6,868,646 divulgue un procédé de construction d'une éolienne, comprenant la superposition d'éléments de l'éolienne, mais d'une manière non optimale.

Face à ces difficultés, un but de la présente invention est de proposer un mode de construction d'un ouvrage civil plus simple et moins coûteux.

L'invention propose ainsi un procédé de construction d'un ouvrage civil comportant un premier et un deuxième éléments superposés. Le procédé comprend les étapes suivantes :
- positionner le deuxième élément sous une structure de levage fixe comportant un moyen de levage ;
- lever le deuxième élément à l'aide du moyen de levage ;
   caractérisé en ce qu'il comprend en outre les étapes suivantes :
- positionner le premier élément sous la structure de levage fixe et sensiblement au-dessous du deuxième élément ; et
- placer le deuxième élément sensiblement sur le premier élément à l'aide du moyen de levage.

Si l'ouvrage civil comporte au moins n éléments superposés, avec n>2, le procédé peut avantageusement comprendre en outre les étapes suivantes, répétées pour p allant de 2 à n-1, lorsque les p premiers éléments de l'ouvrage civil ont déjà été superposés :
- éloigner de la structure de levage fixe la superposition des p premiers éléments, à l'aide d'un moyen d'acheminement ;
- positionner le p+1^{éme} élément sous la structure de levage fixe ;
- lever le p+1^{1ème} élément à l'aide du moyen de levage ;
- positionner la superposition des p premiers éléments sous la structure de levage fixe et sensiblement au-dessous du p+1^{ème} élément ; et
- placer le p+1^{ème} élément sensiblement sur la superposition des p premiers éléments à l'aide du moyen de levage.

L'utilisation d'une telle structure de levage fixe, dans laquelle les différents éléments de l'ouvrage civil à construire sont amenés pour être superposés, rend le processus de construction particulièrement simple et efficace.

Selon des modes de réalisation avantageux qui peuvent être combinés de toute manière envisageable :
- le positionnement d'un élément sous la structure de levage fixe est effectué à l'aide d'un moyen d'acheminement ;
- le moyen d'acheminement comprend un dispositif de vérinage et de déplacement horizontal comprenant des vérins sur coussin d'air ;
- la structure de levage fixe prend la forme d'un portique ;
- la structure de levage fixe est située sur ou à proximité d'un banc de construction sur lequel l'ouvrage civil est essentiellement ou entièrement réalisé ;
- la structure de levage fixe est ancrée sur ou à proximité du banc de construction ;
- la structure de levage fixe est ancrée à l'aide de haubans ;
- le banc de construction est organisé en zones de travail ayant chacune une tâche spécialisée ;
- les tâches spécialisées comprennent au moins une tâche parmi les suivantes : une production d'éléments, un assemblage mécanique et une réalisation d'essais fonctionnels de l'ouvrage civil avant son transport sur son lieu d'installation définitive ;
- la surface de la zone de travail ayant pour tâche spécialisée la réalisation d'essais est traitée pour répartir correctement les efforts sous l'ouvrage civil ;
- chaque tâche spécialisée est divisée en sous-tâches, chaque sous-tâche étant toujours réalisée sur un même poste et des sous-éléments de l'ouvrage civil étant déplacés de poste en poste ;
- la structure de levage fixe est en outre utilisée dans le cadre d'au moins une desdites tâches spécialisées ;
- un moyen d'acheminement permet de déplacer un élément ou un sous-élément de l'ouvrage civil entre au moins une des zones de travail et la structure de levage fixe ;
- le moyen d'acheminement comprend un dispositif de vérinage et de déplacement horizontal comprenant des vérins sur coussin d'air ;
- l'ouvrage civil est destiné à être installé en milieu aquatique et le banc de construction est à proximité d'une voie de communication aquatique;
- l'ouvrage civil a une hauteur supérieure aux dimensions de sa base ;
- l'ouvrage civil est une éolienne comprenant une portion inférieure incluant une embase et, superposée à ladite portion inférieure, une nacelle incorporant un rotor et destinée à porter les pales d'une hélice ;
- on positionne la nacelle sous la structure de levage fixe, on lève la nacelle à l'aide du moyen de levage, on positionne la portion inférieure

sous la structure de levage fixe et sensiblement au-dessous de la nacelle, et on place la nacelle sensiblement sur la portion inférieure à l'aide du moyen de levage ;
- lors de son levage et de son placement sensiblement sur la portion inférieure, la nacelle est munie d'une partie seulement des pales de l'hélice, la partie complémentaire des pales de l'hélice étant adjointe à la nacelle lorsque la nacelle a été placée sensiblement sur la portion inférieure ;
- l'hélice comprend trois pales et la nacelle est munie de deux pales seulement lors de son levage et de son placement sensiblement sur la portion inférieure ;
- la nacelle et les deux pales sont levées et placées sensiblement sur la portion inférieure dans une position telle que la troisième pale adjointe à la nacelle soit placée suivant un axe vertical, sous la nacelle ;
- la structure de levage fixe est en outre utilisée pour placer une partie au moins des pales de l'hélice sur la nacelle ;
- on prévoit en outre un éloignement de l'éolienne de la structure de levage fixe dans lequel le mouvement de translation de l'éolienne est accompagné d'un mouvement de rotation de l'hélice permettant d'éviter un contact entre les pales et la structure de levage fixe ;
- l'ouvrage civil est une éolienne offshore à structure gravitaire ; et/ou
- l'ouvrage civil est une pile de pont.

L'invention propose aussi un système agencé pour construire un ouvrage civil comportant au moins un premier et un deuxième éléments superposés selon le procédé susmentionné. Ce système comprend un portique fixe comportant un moyen de levage apte à lever le premier élément lorsque le premier élément a été positionné sous le portique fixe et à placer le premier élément sensiblement sur le deuxième élément lorsque le deuxième élément a été positionné sous le portique fixe et sensiblement au-dessous du premier élément.

D'autres particularités et avantages de la présente invention apparaîtront dans la description ci-après d'exemples de réalisation non limitatifs, en référence aux dessins annexés, dans lesquels :
- la figure 1 est un schéma illustrant un système comprenant un portique fixe, conformément à l'invention ;
- la figure 2 est un schéma illustrant un mode de réalisation de l'invention faisant intervenir un banc de construction ;
- la figure 3 est un schéma montrant une éolienne ;
- les figures 4A-4G sont des schémas illustrant un exemple d'étapes successives de construction d'une éolienne.

La construction d'un ouvrage civil selon l'invention fait usage d'une structure de levage fixe 1 comportant un moyen de levage 2. Comme cela sera plus particulièrement envisagé dans la suite de la description, à titre d'exemple non limitatif, cette structure peut avantageusement prendre la forme d'un portique. Un tel portique fixe 1 est par exemple en forme de U inversé, avec deux montants verticaux 5b surmontés par une portion horizontale 5a. Le portique 1 est dit fixe dans la mesure où il ne se déplace pas par rapport au support sur lequel il repose.

Le moyen de levage 2 peut être de tout type (crochet de grue, etc.). Il est agencé pour lever tout élément ou tout sous-élément de l'ouvrage civil à construire lorsque celui-ci est positionné sous le portique fixe. Il est en outre agencé pour faire descendre tout élément ou tout sous-élément de l'ouvrage civil à construire préalablement levé. Les actions de levage ou de descente du moyen de levage sont par exemple réalisées en réponse à une commande qui peut être mécanique et/ou électrique.

Le levage et la descente peuvent se faire par exemple principalement selon un axe vertical tel que l'axe médian coupant la barre horizontale supérieure 5a du portique fixe 1. En plus, de ces mouvements verticaux, d'autres mouvements du moyen de levage 2 peuvent être prévus, comme par exemple une rotation autour d'un axe vertical ou bien une translation selon un axe horizontal par exemple.

Le portique fixe 1 et son moyen de levage 2 sont bien sûr dimensionnés selon les caractéristiques des éléments de l'ouvrage civil qu'ils doivent participer à construire.

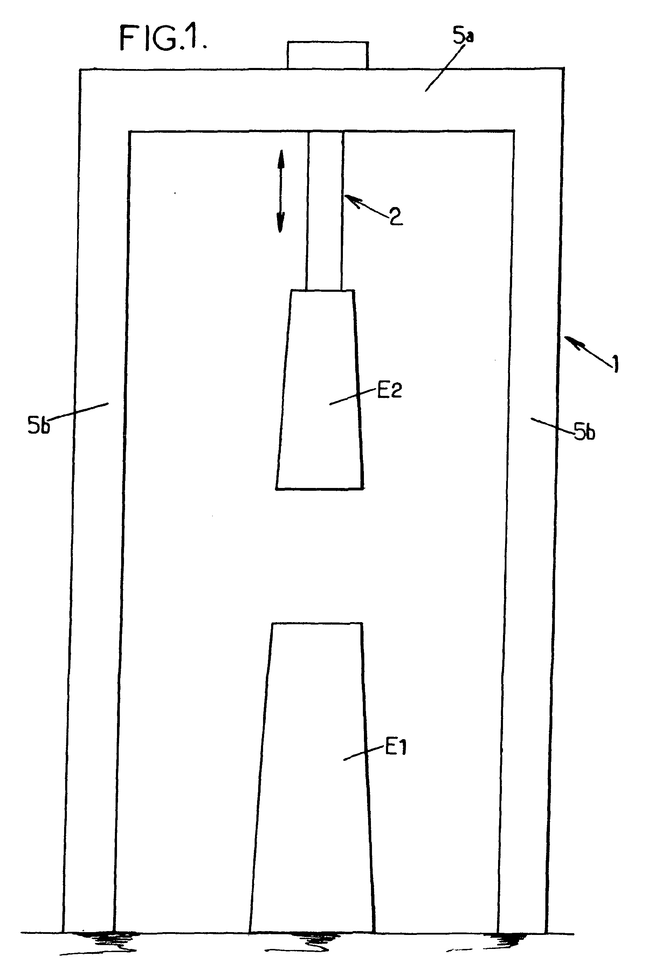

En référence à la figure 1, pour construire un ouvrage civil comportant la superposition d'un premier élément inférieur E1 et d'un deuxième élément supérieur E2, on procède de la façon suivante.

Le deuxième élément E2 est tout d'abord positionné sous le portique fixe 1. A cet effet, c'est le deuxième élément E2 qui est amené, d'une manière quelconque (e.g. à l'aide d'un dispositif de vérinage et de déplacement horizontal comprenant des vérins sur coussin d'air, d'un chariot sur roues, d'un chariot sur rails, ou autre), jusque sous le portique fixe 1, tandis que ce dernier reste en place.

Le deuxième élément E2 est ensuite levé à l'aide du moyen de levage 2. Puis le premier élément E1 est positionné sous le portique fixe 1 et sensiblement au-dessous du deuxième élément E2.

Le deuxième élément E2 est alors redescendu pour être placé sensiblement sur le premier élément E1, à l'aide du moyen de levage 2.

Les éléments E1 et E2 peuvent être fixés l'un à l'autre, par exemple par boulonnage, par soudure ou autre. A cet effet, une ou plusieurs nacelles de travail fixes ou mobiles peuvent être reliées au portique fixe 1 pour permettre à des opérateurs d'accéder à la zone de fixation entre les éléments E1 et E2.

Une fois les éléments E1 et E2 assemblés, ils peuvent être éloignés du portique fixe 1, par exemple par translation. Cet éloignement peut être réalisé de façon similaire à la manière dont les éléments E1 et E2 ont été introduits sous le portique fixe 1, par exemple à l'aide d'un moyen d'acheminement (e.g. un dispositif de vérinage et de déplacement horizontal comprenant des vérins sur coussin d'air, un chariot sur roues, un chariot sur rails, ou autre).

Le cas échéant, ces étapes peuvent être répétées autant de fois que nécessaire pour empiler l'ensemble des éléments constituant l'ouvrage civil. Ainsi, le nouvel élément constitué par la superposition des éléments E1 et E2 pourrait ensuite être levé pour être placé sur un élément E3, de la même manière que décrit précédemment.

Alternativement, un élément E3 pourrait être levé pour être placé sur la superposition des éléments E1 et E2, comme décrit précédemment. Ce dernier mode de réalisation est particulièrement intéressant, car dans ce cas, la charge maximale levée par le moyen de levage n'excède pas la masse de l'élément Ei le plus lourd, ce qui rend le portique plus économique.

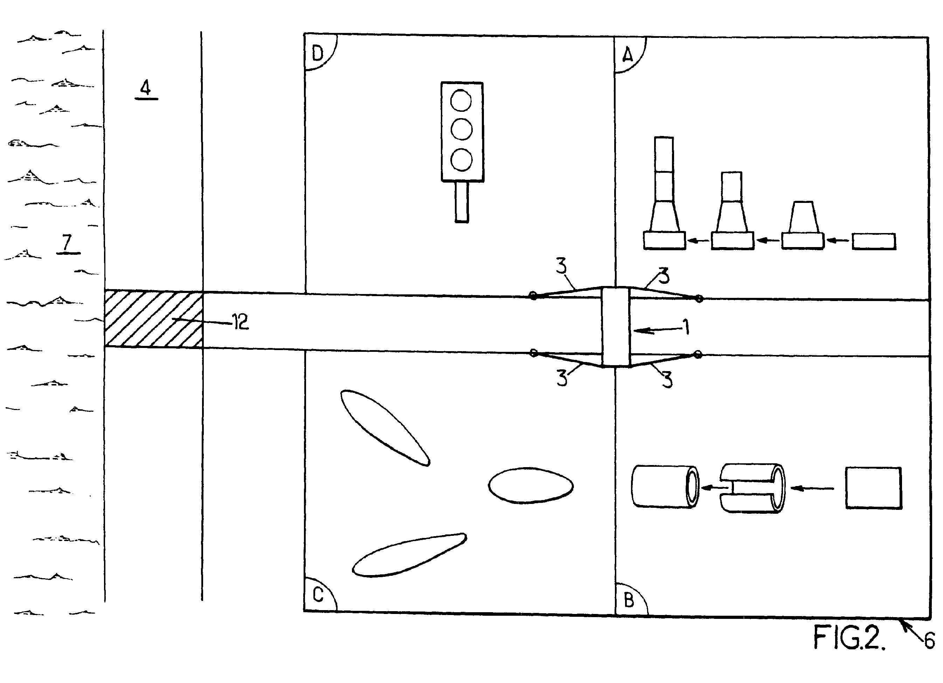

Selon un mode de réalisation avantageux dont un exemple est illustré, en vue de dessus, sur la figure 2, le portique fixe 1 est situé sur un banc de construction 6 sur lequel l'ouvrage civil est essentiellement voire entièrement réalisé. En variante, le portique fixe 1 peut être situé à proximité du banc de construction 6. Il peut éventuellement être ancré sur ou à proximité de ce banc de construction 6, par exemple à l'aide de haubans 3 ou tout autre moyen d'ancrage approprié.

Dans l'exemple illustré, le portique fixe 1 est placé sensiblement au centre du banc de construction 6, bien que d'autres positions soient possibles.

Le banc de construction 6 est avantageusement organisé en zones de travail ayant chacune une tâche spécialisée.

Dans l'exemple illustré sur la figure 2, ces zones A-D sont au nombre de quatre et réalisent respectivement les tâches spécialisées suivantes : une production d'éléments en béton, une production d'éléments en métal, un assemblage mécanique et une réalisation d'essais fonctionnels de l'ouvrage civil avant son transport sur son lieu d'installation définitive.

Dans le cas non limitatif où l'ouvrage civil à construire est une éolienne comprenant une portion inférieure incluant une embase en béton et éventuellement un fût en métal, ainsi qu'une nacelle incorporant un rotor et destinée à porter les pales d'une hélice, les zones A-D peuvent ainsi permettre respectivement la réalisation des tâches suivantes : la fabrication et l'assemblage de l'embase en béton, la fabrication et l'assemblage du fût métallique, l'assemblage mécanique de la nacelle incluant notamment le montage de certaines au moins des pales sur le rotor et éventuellement le montage d'autres éléments mécaniques (pallier du rotor, système de réglage du pas de l'hélice, réducteur, alternateur, régulateur de l'hélice, etc.), et la mise en oeuvre d'essais de l'éolienne pour s'assurer de son bon fonctionnement.

La production d'éléments en béton et/ou la production d'éléments en métal peuvent par exemple être organisées en chaînes de fabrication sur lesquelles des sous-éléments de l'ouvrage à construire progressent. A cet effet, chaque tâche spécialisée peut être divisée en sous-tâches, chaque sous-tâche étant toujours réalisée sur un même poste et les sous-éléments étant déplacés de poste en poste.

Le déplacement horizontal des sous-éléments au sein des chaînes de fabrication peut être assuré à l'aide d'un système de déplacement quelconque, tel qu'un dispositif de vérinage et de déplacement horizontal comprenant des vérins sur coussin d'air ,un chariot sur roues, un chariot sur rails, etc.

Quand elle existe, la zone d'essais peut éventuellement comprendre un branchement à une charge électrique. Elle permet, le cas échéant, de minimiser les coûts d'essai en mer. Dans cette zone, l'éolienne est avantageusement posée temporairement sur une surface répartissant correctement les efforts sous son embase.

Bien sûr, une partie seulement des tâches spécialisées susmentionnées pourraient être mises en oeuvre. D'autres tâches spécialisées peuvent également être envisagées. De même, le nombre de zones du banc de construction peut également varier selon les besoins.

Avantageusement, le portique fixe 1 peut aussi être utilisé dans le cadre d'une ou plusieurs desdites tâches spécialisées.

A titre d'exemple, le moyen de levage 2 du portique fixe 1 pourrait servir à lever une pale de l'hélice en vue de la fixer sur le rotor incorporé dans la nacelle, ou encore pour permettre la superposition de sous-ensembles de l'embase en béton ou du fût métallique. A cet effet, un élément ou un sous-élément de l'ouvrage civil à construire pourrait être déplacé, par un moyen d'acheminement quelconque (e.g. à l'aide d'un dispositif de vérinage et de déplacement horizontal comprenant des vérins sur coussin d'air , d'un chariot sur roues, d'un chariot sur rails, ou autre), entre la zone de travail concernée et le portique fixe 1. Ce déplacement peut comprendre le positionnement de cet élément ou sous-élément sous le portique fixe 1 et/ou le retour de cet élément ou sous-élément depuis le portique fixe 1 vers la zone de travail appropriée du banc de construction. Le moyen d'acheminement utilisé peut éventuellement être le même qu'un système de déplacement utilisé dans une chaîne de fabrication de ladite zone de travail.

Un tel mode de réalisation permet de construire l'ouvrage civil essentiellement voire entièrement sur ou à proximité d'un espace dédié, à savoir le banc de construction 6. Il fournit ainsi un ouvrage fini et partiellement ou entièrement validé par des essais, et donc prêt à l'usage. Il s'agit donc d'une rationalisation du procédé de construction, qui autorise la construction répétitive d'une série d'ouvrages civils, contrairement à la pratique courante.

Lorsque l'ouvrage civil à construire est destiné à être installé en milieu aquatique, par exemple en mer, on constate que la construction selon ce mode de réalisation est beaucoup plus simple que dans l'art antérieur, notamment parce qu'elle est effectuée principalement voire totalement sur terre.

Dans ce cas de figure, le banc de construction peut avantageusement être situé à proximité de la mer ou d'une voie de communication maritime ou fluviale, pour limiter les opérations nécessaires pour mettre l'ouvrage fini en milieu aquatique.

Ainsi, dans l'exemple illustré sur la figure 2, le banc de construction 6 est relié à un quai 4 donnant sur une voie de communication aquatique 7. Le banc de construction 6 constitue un terrain autonome qui peut être éloigné du quai, ce qui évite d'avoir à réaliser des étapes lourdes de la construction sur le quai 4 et donc d'avoir à louer ou à construire un quai suffisamment grand et robuste à cette fin, ce qui serait très coûteux. La portion de quai 12 utilisée est limitée au strict nécessaire pour la mise à l'eau de l'ouvrage civil achevé.

L'invention peut être appliquée à la construction de tout type d'ouvrage civil. Selon un exemple non limitatif, l'ouvrage civil peut avoir une hauteur supérieure aux dimensions de sa base. On peut citer par exemple une éolienne, une pile de pont, ou encore toute structure sensiblement en forme de pylône ou de tour.

On s'intéresse ci-après plus particulièrement au cas d'une éolienne. Celle-ci peut être une éolienne offshore à structure gravitaire, destinée à être située en mer, ou bien on shore, c'est-à-dire destinée à être située sur terre.

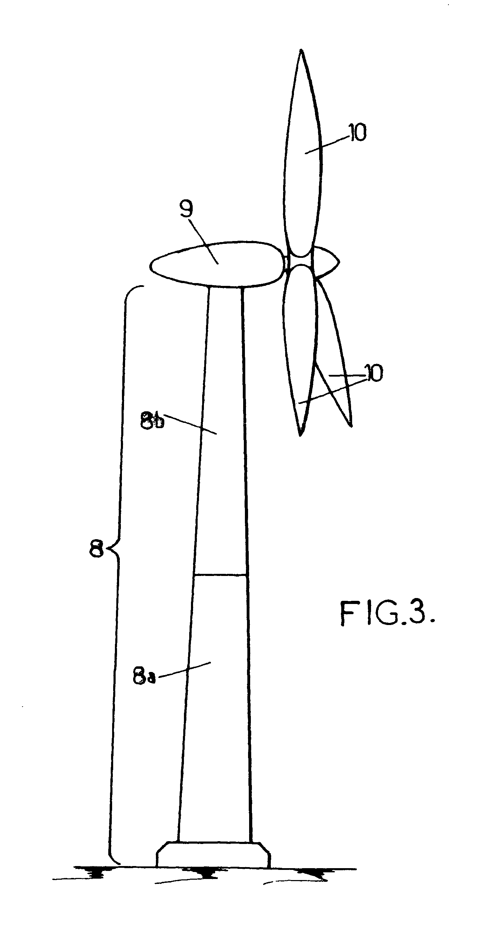

Dans l'exemple illustré sur la figure 3, une telle éolienne comprend une portion inférieure 8, qui peut être monolithique ou bien être composée de plusieurs éléments superposés tels qu'une embase en béton 8a et un fût en métal 8b, ainsi qu'une nacelle 9 incorporant un rotor et destinée à porter les pales 10 d'une hélice. A titre illustratif, pour une éolienne capable de produire 6 MW, l'embase 8 peut atteindre une cinquantaine à une centaine de mètres environ, tandis que la nacelle 9 peut avoir un poids de l'ordre de 300 tonnes.

En référence aux notations adoptées sur la figure 1, lorsqu'on applique le mode de construction de l'invention à une telle éolienne, on peut traiter la nacelle 9 comme un deuxième élément E2 et la portion inférieure 8 comme un premier élément E1.

Ainsi, la construction de l'éolienne de la figure 3 comprend les étapes suivantes : on positionne la nacelle 9 sous le portique fixe, on lève la nacelle 9 à l'aide du moyen de levage du portique fixe, on positionne la portion inférieure 8 sous le portique fixe et sensiblement au-dessous de la nacelle 9, et on place la nacelle 9 sensiblement sur la portion inférieure 8 à l'aide du moyen de levage. Ces étapes permettent d'obtenir la superposition de la figure 3, c'est-à-dire que la nacelle 9 repose alors sur la portion inférieure 8.

Lors de son levage et de son placement sur l'embase 8, la nacelle peut n'être munie d'aucune des pales 10 qui constitueront l'hélice de l'éolienne ou bien de l'ensemble de ces pales 10. Alternativement, seule une partie des pales 10 de l'hélice pourraient être fixées sur la nacelle 9 au cours de ces étapes, la partie complémentaire des pales 10 de l'hélice étant adjointe à la nacelle 9 lorsque cette dernière a été placée sur la portion inférieure 8.

En plus de la superposition de la portion inférieure 8 et de la nacelle 9, d'autres étapes de la construction de l'éolienne peuvent être assurées à l'aide du portique fixe. A titre d'exemple, le portique fixe peut être utilisé pour placer une partie au moins des pales 10 de l'hélice sur la nacelle 9. On tire ainsi profit de la capacité de levage du portique fixe dans différentes étapes de la construction.

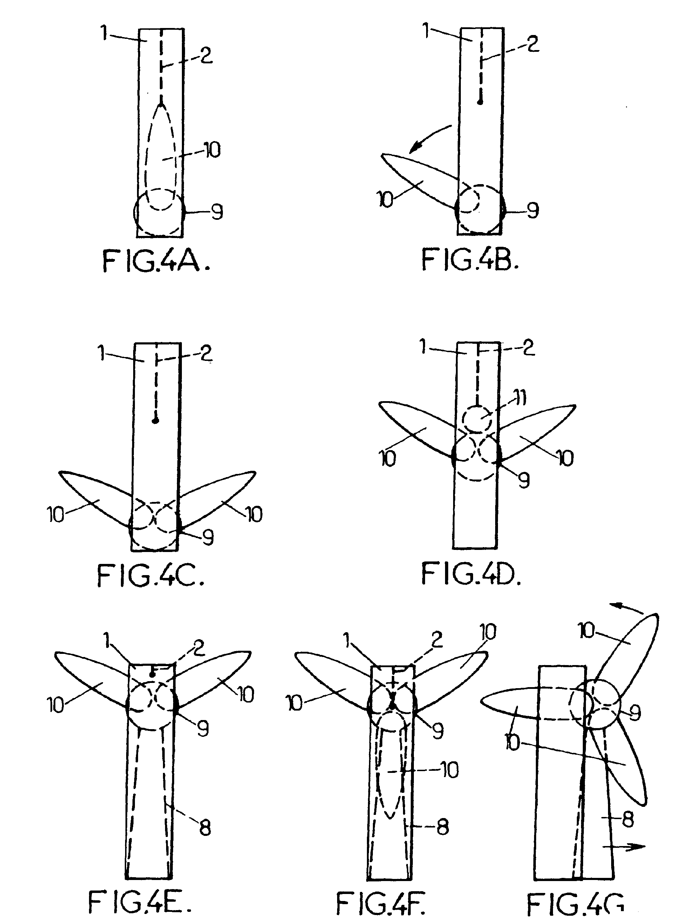

Les figures 4A-4G montrent, en vue latérale, des étapes successives selon un exemple de construction de l'éolienne.

Sur la figure 4A, la nacelle 9 est positionnée sous le portique fixe 1 et une première pale 10 est levée à l'aide du moyen de levage 2 du portique fixe 1, pour être fixée sur le rotor incorporé dans la nacelle 9.

On fait ensuite tourner le rotor pour entraîner la première pale 10 installée jusqu'à une position souhaitée, comme illustré sur la figure 4B.

Une deuxième pale 10 est alors fixée au rotor. Elle prend une position souhaitée qui peut avantageusement être le symétrique de la première pale 10 par rapport à un axe vertical passant par le centre de la nacelle 9 (voir figure 4C).

L'ensemble constitué de la nacelle 9 et des deux pales 10 installées est levé à l'aide du moyen de levage 2 du portique fixe 1. A cet effet, comme illustré sur la figure 4D, une charpente métallique 11 peut être accrochée à cet ensemble et fixée temporairement au moyen de levage 2. Sa position est de préférence choisie en fonction du centre de gravité de l'ensemble, pour assurer un levage équilibré. Le point de levage est avantageusement fixé au-dessus du centre de gravité de l'ensemble.

L'ensemble constitué de la nacelle 9 et des deux pales 10 est ensuite placé sur la portion inférieure 8, comme expliqué plus haut (voir figure 4E).

Lors de leur levage et de leur placement sur la portion inférieure 8, la nacelle 9 et les deux pales 10 sont par exemple dans une position telle que la troisième pale adjointe à la nacelle puisse être placée suivant un axe vertical, sous la nacelle.

Enfin, la troisième pale 10 est levée, par exemple, à l'aide du moyen de levage 2 du portique fixe 1, puis fixée sur le rotor incorporé dans la nacelle 9 de façon à former l'hélice de l'éolienne.

Si une des pales 10 s'étend à proximité de la barre horizontale supérieure 5a du portique, on peut en outre prévoir de faire tourner le rotor lorsque l'éolienne 1 finie quitte par translation le portique, afin que celle-ci échappe à la barre 5a (voir figure 4G).

A travers cet exemple non limitatif, on comprend que le portique fixe 1 peut intervenir à des étapes variées de la construction.

Bien sûr, d'autres étapes que celles mentionnées ci-dessus peuvent tirer profit du portique fixe 1 et de son moyen de levage 2. A titre d'exemple, lorsque la portion inférieure 8 de l'éolienne comprend une embase en béton 8a et un fût en métal 8b, comme illustré sur la figure 3, ces deux parties peuvent être superposées grâce au portique fixe 1 selon les principes exposés plus haut. La nacelle 9 est ensuite placée sensiblement sur la superposition de l'embase 8a et du fût 8b.

Comme cela apparaîtra à l'homme du métier, la présente invention rend la construction d'ouvrages civils beaucoup plus aisée que dans l'art antérieur. Elle permet en effet d'industrialiser un procédé de génie civil et de limiter la complexité et la capacité des moyens de levage nécessaires. A ce titre, elle peut être particulièrement utile pour la construction répétitive d'une pluralité d'ouvrages identiques ou similaires, comme c'est le cas par exemple pour une série d'éoliennes ou les différentes piles d'un pont.

## Revendications

1. Procédé de construction d'un ouvrage civil comportant un premier (E1) et un deuxième (E2) éléments superposés, le procédé comprenant les étapes suivantes :
- positionner le deuxième élément (E2) sous une structure de levage fixe (1) comportant un moyen de levage (2) ;
- lever le deuxième élément (E2) à l'aide du moyen de levage (2) ;
**caractérisé en ce qu'**il comprend en outre les étapes suivantes :
- positionner le premier élément (E1) sous la structure de levage fixe (1) et sensiblement au-dessous du deuxième élément (E2) ; et
- placer le deuxième élément (E2) sensiblement sur le premier élément (E1) à l'aide du moyen de levage (2).

2. Procédé selon la revendication 1, dans lequel l'ouvrage civil comporte au moins n éléments superposés, avec n>2, le procédé comprenant en outre les étapes suivantes, répétées pour p allant de 2 à n-1, lorsque les p premiers éléments de l'ouvrage civil ont déjà été superposés :
- éloigner de la structure de levage fixe (1) la superposition des p premiers éléments, à l'aide d'un moyen d'acheminement ;
- positionner le p+1^{ème} élément sous la structure de levage fixe ;
- lever le p+1^{ème} élément à l'aide du moyen de levage (2) ;
- positionner la superposition des p premiers éléments sous la structure de levage fixe et sensiblement au-dessous du p+1^{ème} élément ; et
- placer le p+1^{ème} élément sensiblement sur la superposition des p premiers éléments à l'aide du moyen de levage.

3. Procédé selon la revendication 1 ou 2, dans lequel le positionnement d'un élément sous la structure de levage fixe est effectué à l'aide d'un moyen d'acheminement.

4. Procédé selon la revendication 2 ou 3, dans lequel le moyen d'acheminement comprend un dispositif de vérinage et de déplacement horizontal comprenant des vérins sur coussin d'air.

5. Procédé selon l'une quelconque des revendications précédentes, dans lequel la structure de levage fixe (1) prend la forme d'un portique.

6. Procédé selon l'une quelconque des revendications précédentes, dans lequel la structure de levage fixe (1) est située sur ou à proximité d'un banc de construction (6) sur lequel l'ouvrage civil est essentiellement ou entièrement réalisé.

7. Procédé selon la revendication 6, dans lequel la structure de levage fixe (1) est ancrée sur ou à proximité du banc de construction (6).

8. Procédé selon la revendication 7, dans lequel la structure de levage fixe (1) est ancrée à l'aide de haubans (3).

9. Procédé selon l'une quelconque des revendications 6 à 8, dans lequel le banc de construction (6) est organisé en zones de travail (A-D) ayant chacune une tâche spécialisée.

10. Procédé selon la revendication 9, dans lequel les tâches spécialisées comprennent au moins une tâche parmi les suivantes : une production d'éléments, un assemblage mécanique et une réalisation d'essais fonctionnels de l'ouvrage civil avant son transport sur son lieu d'installation définitive.

11. Procédé suivant la revendication 10, dans lequel la surface de la zone de travail ayant pour tâche spécialisée la réalisation d'essais est traitée pour répartir correctement les efforts sous l'ouvrage civil.

12. Procédé selon l'une quelconque des revendications 9 à 11, dans lequel chaque tâche spécialisée est divisée en sous-tâches, chaque sous-tâche étant toujours réalisée sur un même poste et des sous-éléments de l'ouvrage civil étant déplacés de poste en poste.

13. Procédé selon l'une quelconque des revendications 9 à 12, dans lequel la structure de levage fixe (1) est en outre utilisée dans le cadre d'au moins une desdites tâches spécialisées.

14. Procédé selon l'une quelconque des revendications 9 à 13, dans lequel un moyen d'acheminement permet de déplacer un élément ou un sous-élément de l'ouvrage civil entre au moins une des zones de travail (A-D) et la structure de levage fixe (1).

15. Procédé selon la revendication 14, dans lequel le moyen d'acheminement comprend un dispositif de vérinage et de déplacement horizontal comprenant des vérins sur coussin d'air.

16. Procédé selon l'une quelconque des revendications 6 à 15, dans lequel l'ouvrage civil est destiné à être installé en milieu aquatique et dans lequel le banc de construction (6) est à proximité d'une voie de communication aquatique (7).

17. Procédé selon l'une quelconque des revendications précédentes, dans lequel l'ouvrage civil a une hauteur supérieure aux dimensions de sa base.

18. Procédé selon la revendication 17, dans lequel l'ouvrage civil est une éolienne comprenant une portion inférieure (8) incluant une embase et, superposée à ladite portion inférieure, une nacelle (9) incorporant un rotor et destinée à porter les pales (10) d'une hélice.

19. Procédé selon la revendication 18, dans lequel on positionne la nacelle (9) sous la structure de levage fixe (1), on lève la nacelle à l'aide du moyen de levage (2), on positionne la portion inférieure (8) sous la structure de levage fixe et sensiblement au-dessous de la nacelle, et on place la nacelle sensiblement sur la portion inférieure à l'aide du moyen de levage.

20. Procédé selon la revendication 19, dans lequel, lors de son levage et de son placement sensiblement sur la portion inférieure (8), la nacelle (9) est munie d'une partie seulement des pales (10) de l'hélice, la partie complémentaire des pales de l'hélice étant adjointe à la nacelle lorsque la nacelle a été placée sensiblement sur la portion inférieure.

21. Procédé selon la revendication 20, dans lequel l'hélice comprend trois pales et la nacelle (9) est munie de deux pales seulement lors de son levage et de son placement sensiblement sur la portion inférieure (8).

22. Procédé selon la revendication 21, dans lequel la nacelle (9) et les deux pales sont levées et placées sensiblement sur la portion inférieure (8) dans une position telle que la troisième pale adjointe à la nacelle soit placée suivant un axe vertical, sous la nacelle.

23. Procédé selon l'une quelconque des revendications 19 à 22, dans lequel la structure de levage fixe (1) est en outre utilisée pour placer une partie au moins des pales (10) de l'hélice sur la nacelle (9).

24. Procédé suivant l'une quelconque des revendications 19 à 23, comprenant en outre un éloignement de l'éolienne de la structure de levage fixe (1) dans lequel le mouvement de translation de l'éolienne est accompagné d'un mouvement de rotation de l'hélice permettant d'éviter un contact entre les pales (10) et la structure de levage fixe (1).

25. Procédé selon l'une quelconque des revendications 18 à 24, dans lequel l'ouvrage civil est une éolienne offshore à structure gravitaire.

26. Procédé selon la revendication 17, dans lequel l'ouvrage civil est une pile de pont.

27. Système agencé pour construire un ouvrage civil comportant un premier (E1) et un deuxième (E2) éléments superposés selon l'une quelconque des revendications précédentes, le système comprenant une structure de levage fixe (1) comportant un moyen de levage (2) apte à lever le deuxième élément lorsque le deuxième élément a été positionné sous la structure de levage fixe et à placer le deuxième élément sensiblement sur le premier élément lorsque le premier élément a été positionné sous la structure de levage fixe et sensiblement au-dessous du deuxième élément.

## Claims

1. Method for the construction of a civil engineering structure comprising a first (E1) and a second (E2) superimposed components, the method comprising the steps of:
- positioning the second component (E2) beneath a fixed lifting structure (1) comprising lifting means (2);
- lifting the second component (E2) using the lifting means (2);
**characterized in that** it further comprises the steps of:
- positioning the first component (E1) beneath the fixed lifting structure (1) substantially below the second component (E2); and
- placing the second component (E2) substantially on the first component (E1) using the lifting means (2).

2. Method according to claim 1, wherein the civil engineering structure comprises at least n superimposed components, where n>2, the method further comprising the following steps, repeated for p from 2 to n-1, when the first components p of the civil engineering structure have already been superimposed:
- moving the superimposed p first components away from the fixed lifting structure (1) using movement means,
- positioning the p+1^{th} component beneath the fixed lifting structure,
- lifting the p+1^{th} component using the lifting means (2),
- positioning the superimposed p first components beneath the fixed lifting structure substantially below the p+1^{th} component, and
- placing the p+1^{th} component substantially on the superimposed p first components using the lifting means.

3. Method according to claim 1 or 2, wherein positioning a component beneath the fixed lifting structure is made using movement means.

4. Method according to claim 2 or 3, wherein the movement means comprises a jacking and horizontal movement device comprising jacks on an air cushion.

5. Method according to any one of the preceding claims, wherein the fixed lifting structure takes the form of a portal.

6. Method according to any one of the preceding claims, wherein the fixed lifting structure (1) is located on or close to a construction surface (6) on which the civil engineering structure is essentially or wholly constructed.

7. Method according to claim 6, wherein the fixed lifting structure (1) is anchored on or close to the construction surface (6).

8. Method according to claim 7, wherein the fixed lifting structure (1) is anchored by means of stays (3).

9. Method according to any one of claims 6 to 8, wherein the construction surface (6) is organised into working areas (A-D) each having a specialised task.

10. Method according to claim 9, wherein the specialised tasks comprise at least one of the following tasks: production of components, mechanical assembly and performance of functional tests on the civil engineering structure before it is transported to its permanent installation site.

11. Method according to claim 10, wherein the surface of the working area having the specialised task of performing tests is arranged so as to correctly distribute forces beneath the civil engineering structure.

12. Method according to any one of claims 9 to 11, wherein each specialised task is subdivided into sub-tasks, each sub-task being always carried out at the same station and sub-components of the civil engineering structure being moved from station to station.

13. Method according to any one of claims 9 to 12, wherein the fixed lifting structure (1) is also used in the context of at least one of said specialised tasks.

14. Method according to any one of claims 9 to 13, wherein movement means can be used to move a component or sub-component of the civil engineering structure between at least one of the working areas (A-D) and the fixed lifting structure (1).

15. Method according to claim 14, wherein the movement means comprises a jacking and horizontal movement device comprising jacks on an air cushion.

16. Method according to any one of claims 6 to 15, wherein the civil engineering structure is intended to be installed in an aquatic medium and wherein the construction surface (6) is close to an aquatic communications route (7).

17. Method according to claim 1, wherein the civil engineering structure has a height greater than the dimensions of its base.

18. Method according to claim 17, wherein the civil engineering structure is a wind generator comprising a bottom portion (8) including a base and superimposed on said bottom portion a nacelle (9) incorporating a hub and designed to carry the blades (10) of a rotor.

19. Method according to claim 18, wherein the nacelle (9) is positioned beneath the fixed lifting structure (1), the nacelle is lifted using the lifting means (2), the bottom portion (8) is positioned beneath the fixed lifting structure and substantially below the nacelle, and the nacelle is placed substantially on the bottom portion using the lifting means.

20. Method according to claim 19, wherein, while being lifted and substantially placed on the bottom portion (8), the nacelle (9) is fitted with only some of the blades (10) of the rotor, the additional rotor blades being attached to the nacelle when the nacelle has been placed substantially on the bottom portion.

21. Method according to claim 20, wherein the rotor comprises three blades and the nacelle (9) is fitted with only two blades when it is lifted and substantially placed on the bottom portion (8).

22. Method according to claim 21, wherein the nacelle (9) and the two blades are lifted and placed substantially on the bottom portion (8) in a position such that the third blade attached to the nacelle is placed in a vertical axis beneath the nacelle.

23. Method according to any one of claims 19 to 22, wherein the fixed lifting structure (1) is further used to place at least a part of the blades (10) of the rotor on the nacelle (9).

24. Method according to any one of claims 19 to 23, further comprising moving the wind generator away from the fixed lifting structure (1) wherein lateral movement of the wind generator is accompanied by rotational movement of the rotor so as to avoid contact between the blades (10) and the fixed lifting structure (1).

25. Method according to any one of claims 18 to 24, wherein the civil engineering structure is an offshore gravity-based wind generator.

26. Method according to claim 17, wherein the civil engineering structure is a bridge pier.

27. A system arranged for the construction of a civil engineering structure comprising first (E1) and second (E2) superimposed components according to any one of the preceding claims, the system comprising a fixed lifting structure (1) comprising lifting means (2) capable of lifting the second component when the second component has been positioned beneath the fixed lifting structure and of placing the second component substantially on the first component when the first component has been positioned beneath the fixed lifting structure and substantially below the second component.

## Patentansprüche

1. Verfahren zur Konstruktion eines Tiefbauwerks, das erste (E1) und zweite (E2) übereinander angeordnete Elemente aufweist, wobei das Verfahren die folgenden Schritte enthält:
- Positionieren des zweiten Elements (E2) unter einer ortsfesten Hebestruktur (1), die eine Hubeinrichtung (2) aufweist;
- Anheben des zweiten Elements (E2) mit Hilfe der Hubeinrichtung (2);
**dadurch gekennzeichnet, dass** es außerdem die folgenden Schritte enthält:
- Positionieren des ersten Elements (E1) unter der ortsfesten Hebestruktur (1) und im Wesentlichen unter dem zweiten Element (E2); und
- Anordnen des zweiten Elements (E2) im Wesentlichen auf dem ersten Element (E1) mit Hilfe der Hubeinrichtung (2).

2. Verfahren nach Anspruch 1, bei dem das Tiefbauwerk mindestens n übereinander angeordnete Elemente aufweist, mit n>2, wobei das Verfahren außerdem die folgenden Schritte enthält, die für p von 2 bis n-1 wiederholt werden, wenn die p ersten Elemente des Tiefbauwerks bereits übereinander angeordnet wurden:
- Entfernen der Übereinanderanordnung der p ersten Elemente von der ortsfesten Hebestruktur (1) mit Hilfe einer Beförderungseinrichtung;
- Positionieren des p+1^{ten} Elements unter der ortsfesten Hebestruktur;
- Anheben des p+1^{ten} Elements mit Hilfe der Hubeinrichtung (2);
- Positionieren der Übereinanderanordnung der p ersten Elemente unter der ortsfesten Hebestruktur und im Wesentlichen unter dem p+1^{ten} Element; und
- Anordnen des p+1^{ten} Elements im Wesentlichen auf der Übereinanderanordnung der p ersten Elemente mit Hilfe der Hubeinrichtung.

3. Verfahren nach Anspruch 1 oder 2, bei dem die Positionierung eines Elements unter der ortsfesten Hebestruktur mit Hilfe einer Beförderungseinrichtung durchgeführt wird.

4. Verfahren nach Anspruch 2 oder 3, bei dem die Beförderungseinrichtung eine Vorrichtung zum Heben-Senken und waagrechten Verschieben enthält, die Arbeitszylinder auf Luftkissen enthält.

5. Verfahren nach einem der vorhergehenden Ansprüche, bei dem die ortsfeste Hebestruktur (1) die Form eines Portalkrans annimmt.

6. Verfahren nach einem der vorhergehenden Ansprüche, bei dem die ortsfeste Hebestruktur (1) sich auf oder in der Nähe einer Konstruktionsbank (6) befindet, auf der das Tiefbauwerk im Wesentlichen oder ganz hergestellt wird.

7. Verfahren nach Anspruch 6, bei dem die ortsfeste Hebestruktur (1) auf oder in der Nähe der Konstruktionsbank (6) verankert ist.

8. Verfahren nach Anspruch 7, bei dem die ortsfeste Hebestruktur (1) mit Hilfe von Abspannseilen (3) verankert wird.

9. Verfahren nach einem der Ansprüche 6 bis 8, bei dem die Konstruktionsbank (6) in Arbeitszonen (A-D) organisiert ist, die je eine besondere Aufgabe haben.

10. Verfahren nach Anspruch 9, bei dem die besonderen Aufgaben mindestens eine der folgenden Aufgaben enthalten: eine Herstellung von Elementen, ein mechanischer Zusammenbau und eine Durchführung von Funktionstests des Tiefbauwerks vor seinem Transport an seinen endgültigen Einbauort.

11. Verfahren nach Anspruch 10, bei dem die Fläche der Arbeitszone, die als besondere Aufgabe die Durchführung von Tests hat, behandelt wird, um die Kräfte unter dem Tiefbauwerk korrekt zu verteilen.

12. Verfahren nach einem der Ansprüche 9 bis 11, bei dem jede besondere Aufgabe in Unteraufgaben aufgeteilt wird, wobei jede Unteraufgabe immer an der gleichen Station durchgeführt wird und Unterelemente des Tiefbauwerks von einer Station zur anderen verschoben werden.

13. Verfahren nach einem der Ansprüche 9 bis 12, bei dem die ortsfeste Hebestruktur (1) außerdem im Rahmen mindestens einer der besonderen Aufgaben verwendet wird.

14. Verfahren nach einem der Ansprüche 9 bis 13, bei dem eine Beförderungseinrichtung es ermöglicht, ein Element oder ein Unterelement des Tiefbauwerks zwischen mindestens einer der Arbeitszonen (A-D) und der ortsfesten Hebestruktur (1) zu verschieben.

15. Verfahren nach Anspruch 14, bei dem die Beförderungseinrichtung eine Vorrichtung zum Heben-Senken und zur waagerechten Verschiebung enthält, die Arbeitszylinder auf Luftkissen enthält.

16. Verfahren nach einem der Ansprüche 6 bis 15, bei dem das Tiefbauwerk dazu bestimmt ist, im Wasser aufgestellt zu werden, und bei dem die Konstruktionsbank (6) sich in der Nähe eines Wasserverkehrswegs (7) befindet.

17. Verfahren nach einem der vorhergehenden Ansprüche, bei dem das Tiefbauwerk eine Höhe hat, die größer ist als die Abmessungen seiner Basis.

18. Verfahren nach Anspruch 17, bei dem das Tiefbauwerk eine Windkraftanlage ist, die einen einen Sockel enthaltenden unteren Abschnitt (8) und über dem unteren Abschnitt angeordnet eine Gondel (9) enthält, die einen Rotor umfasst und dazu bestimmt ist, die Blätter (10) eines Propellers zu tragen.

19. Verfahren nach Anspruch 18, bei dem die Gondel (9) unter der ortsfesten Hebestruktur (1) positioniert wird, die Gondel mit Hilfe der Hubeinrichtung (2) angehoben wird, der untere Abschnitt (8) unter der ortsfesten Hebestruktur und im Wesentlichen unter der Gondel positioniert wird, und die Gondel mit Hilfe der Hubeinrichtung im Wesentlichen auf dem unteren Abschnitt angeordnet wird.

20. Verfahren nach Anspruch 19, bei dem die Gondel (9) bei ihrem Anheben und ihrem Anordnen im Wesentlichen auf dem unteren Abschnitt (8) nur mit einem Teil der Blätter (10) des Propellers versehen ist, während der komplementäre Teil der Blätter des Propellers zur Gondel hinzugefügt wird, wenn die Gondel im Wesentlichen auf dem unteren Abschnitt angeordnet wurde.

21. Verfahren nach Anspruch 20, bei dem der Propeller drei Blätter enthält und die Gondel (9) bei ihrem Anheben und ihrem Anordnen im Wesentlichen auf dem unteren Abschnitt (8) nur mit zwei Blättern versehen ist.

22. Verfahren nach Anspruch 21, bei dem die Gondel (9) und die zwei Blätter angehoben und auf dem unteren Abschnitt (8) im Wesentlichen in einer solchen Stellung angeordnet werden, dass das dritte zur Gondel hinzugefügte Blatt gemäß einer senkrechten Achse unter der Gondel angeordnet wird.

23. Verfahren nach einem der Ansprüche 19 bis 22, bei dem die ortsfeste Hebestruktur (1) außerdem verwendet wird, um mindestens einen Teil der Blätter (10) des Propellers auf der Gondel (9) anzuordnen.

24. Verfahren nach einem der Ansprüche 19 bis 23, das weiter ein Entfernen der Windkraftanlage von der ortsfesten Hebestruktur (1) enthält, wobei die Translationsbewegung der Windkraftanlage von einer Drehbewegung des Propellers begleitet wird, was es ermöglicht, einen Kontakt zwischen den Propellerblättern (10) und der ortsfesten Hebestruktur (1) zu vermeiden.

25. Verfahren nach einem der Ansprüche 18 bis 24, bei dem das Tiefbauwerk eine Offshore-Windkraftanlage mit Schwerkraftgründung ist.

26. Verfahren nach Anspruch 17, bei dem das Tiefbauwerk ein Brückenpfeiler ist.

27. System, das eingerichtet ist, um ein Tiefbauwerk zu konstruieren, das erste (E1) und zweite (E2) übereinander angeordnete Elemente nach einem der vorhergehenden Ansprüche aufweist, wobei das System eine ortsfeste Hebestruktur (1) enthält, die eine Hubeinrichtung (2) aufweist, die das zweite Element anheben kann, wenn das zweite Element unter der ortsfesten Hebestruktur positioniert wurde, und das zweite Element im Wesentlichen auf dem ersten Element anordnen kann, wenn das erste Element unter der ortsfesten Hebestruktur und im Wesentlichen unter dem zweiten Element positioniert wurde.
